Europäisches Patentamt

European Patent Office

Office européen des brevets

(19)

(11) Veröffentlichungsnummer: **0 046 966**

**A1**

(12) # EUROPÄISCHE PATENTANMELDUNG

(21) Anmeldenummer: 81106570.5

(22) Anmeldetag: 25.08.81

(51) Int. Cl.³: **F 16 H 25/20**
**E 04 H 3/19**

(30) Priorität: 28.08.80 DE 8022949 U

(43) Veröffentlichungstag der Anmeldung:
10.03.82 Patentblatt 82/10

(84) Benannte Vertragsstaaten:
AT BE CH DE FR GB IT LI NL

(71) Anmelder: Alpha-Vogt GmbH + Co. KG.
Im steinernen Kreuz 42
D-7131 Wurmberg(DE)

(72) Erfinder: Vogt, Beat
Im Steinernen Kreuz
D-7131 Wurmberg(DE)

(74) Vertreter: Twelmeier, Ulrich, Dipl.Phys. et al,
Patentanwälte Dr. Rudolf Bauer,Dipl.-Ing.Helmut
Hubbuch Dipl.Phys. Ulrich Twelmeier Dipl.Phys. Ulrich
Twelmeier Westliche 29-31
D-7530 Pforzheim(DE)

(54) Antriebsaggregat für eine Schwimmbadabdeckung.

(57) Es wird ein Antriebsaggregat für die Wickelwalze (6) einer rollbaren Schwimmbadabdeckung aus einer folienkaschierten Schaumstoffbahn beschrieben, welche aus einem Elektromotor und einem den Elektromotor mit der Wickelwalze (6) verbindenden Getriebe besteht, welches eine angetriebene Spindel (2) enthält, die - bezogen auf die Wickelwalze (6) - ein gleichbleibendes Übersetzungsverhältnis aufweist und mit einem eine zum Spindelgewinde passende Gewindebohrung aufweisenden Arm (7) in Eingriff steht, in dessen Verschiebeweg zwei abstandsveränderliche Endausschalter (13, 14) des Elektromotors angeordnet sind.

Fig.2

EP 0 046 966 A1

- 1 -

## Antriebsaggregat für eine Schwimmbadabdeckung

Die Erfindung befaßt sich mit einem Antriebsaggregat, welches die Merkmale des Oberbegriffs
des Anspruchs 1 aufweist.

Seit kurzer Zeit sind rollbare Schwimmbadabdeckungen im Handel, die aus einer beidseitig folienkaschierten Hartschaumstoffbahn bestehen. Eine
solche Abdeckung wird von einer am Beckenrand
montierten Wickelwalze abgerollt und gleitet, ohne
daß es einer besonderen Führung bedürfte, schwimmend
über die Wasseroberfläche bis zum gegenüberliegenden Beckenrand. Das Abrollen und das Aufrollen der
Abdeckung erfolgen bislang mittels eines von Hand
ein- und auszuschaltenden Elektromotors, der über
ein mechanisches Getriebe mit der Wickelwalze verbunden ist. Dabei hat es sich gezeigt, daß der
Motor häufig zu spät ausgeschaltet wurde, sodaß in
der Abdeckung Verwerfungen und auch ein Verziehen
auftraten, was in der Folge den Geradeauslauf der
Abdeckung beeinträchtigte.

Der Erfindung liegt die Aufgabe zugrunde, hier Abhilfe zu schaffen durch ein selbsttätig in den vorgegebenen Endlagen abschaltendes Antriebsaggregat.

- 2 -

Die Erfindung löst diese Aufgabe durch ein Antriebsaggregat mit den im Anspruch 1 angegebenen
Merkmalen. Vorteilhafte Weiterbildungen der Erfindung sind Gegenstand der Unteransprüche.

Die erfindungsgemäße Lösung ist einfach im Aufbau,
sicher und zuverlässig in der Funktion und gewährleistet über die Lebensdauer der Abdeckung eine
gleichbleibende Präzision. Dazu trägt bei, daß die
Lage der Ausschaltpunkte auf rein mechanischem
Wege festgelegt wird und der einzelne Abschaltvorgang von der Stellung der Wickelwalze abgeleitet
wird. Die Verwendung von Spindeln zur Einstellung
der Schaltpunkte und zur Schalterbetätigung ermöglicht erfahrungsgemäß eine zentimetergenaue
Justierung der Endlagen der Abdeckung. Die Lage
der Endausschalter wird beim Einbau der Abdeckung
einmal von Hand für das jeweilige Becken passend
eingestellt und braucht dann nicht mehr nachgestellt
zu werden, obwohl eine solche Nachstellung jederzeit
möglich wäre.

Ein Ausführungsbeispiel der Erfindung ist in den beigefügten Zeichnungen schematisch dargestellt und
wird nachfolgend beschrieben.

Figur 1 zeigt den hier interessierenden Teil des Antriebsaggregats in der Draufsicht, und

Figur 2 zeigt dieses Antriebsaggregat in der Ansicht II-II gemäß Figur 1.

In einem Gehäuse 1 gelagert ist eine angetriebene Spindel 2, die am Ende ihres Gewindeabschnitts mit einem Zahnrad 3 drehfest verbunden ist und sich jenseits dieses Zahnrads 3 aus dem Gehäuse 1 austretend sich in einen Fortsatz 6 einer Wickelwalze fortsetzt, welche die aus einer folienkaschierten Schaumstoffbahn gebildete Schwimmbadabdeckung aufnimmt.

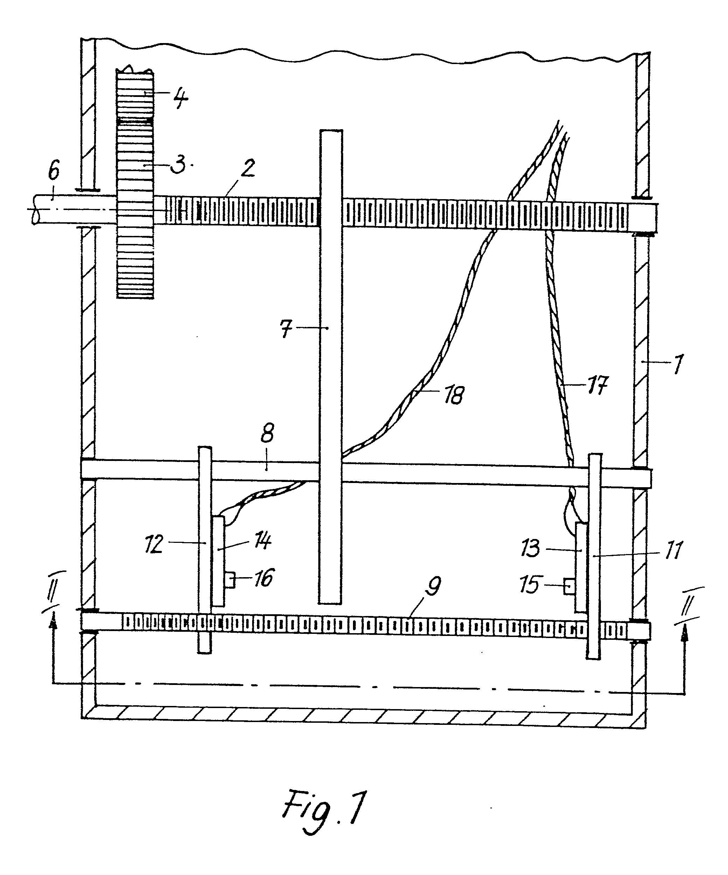

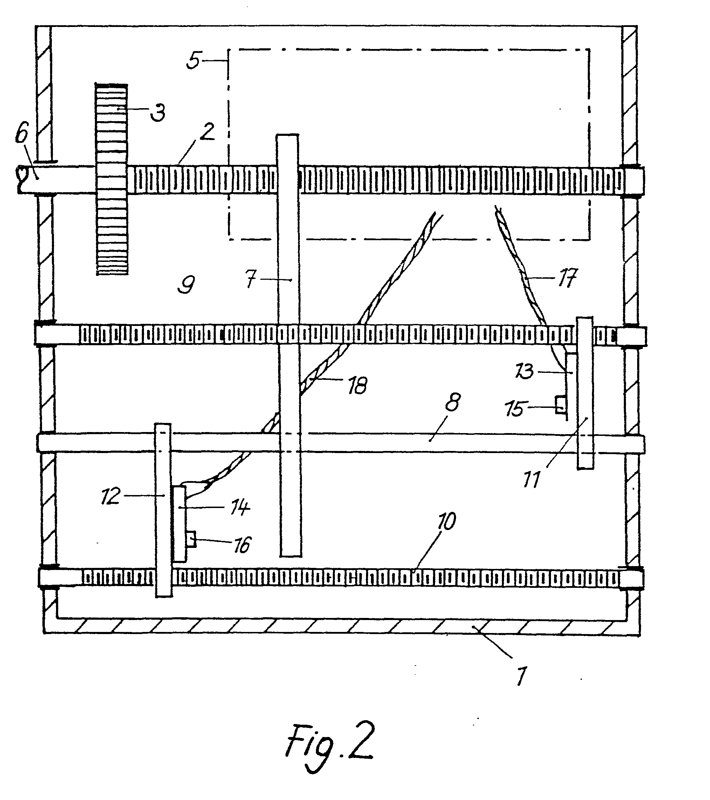

Die Spindel 2 und mit ihr die Wickelwalze werden durch einen Elektromotor angetrieben, wobei zwischen dem Elektromotor und der Spindel 2 noch weitere Getriebeelemente liegen, von denen in Figur 1 nur ein weiteres Zahnrad 4 gezeichnet ist und die im übrigen gemeinsam als Block 5 strichpunktiert in Figur 2 dargestellt sind.

Auf der angetriebenen Spindel 2 steckt ein mit einer passenden Gewindebohrung versehener Arm 7, der noch parallel zur Gewindebohrung eine zylindrische Bohrung aufweist, die von einer dazu passenden zylindrischen Welle 8 durchsetzt ist, welche feststehend im Gehäuse 1 parallel zur Spindel 2 gelagert ist und für eine Parallelführung des Arms 7 sorgt, wenn dieser durch Drehung der Spindel 2 verschoben wird.

Oberhalb und unterhalb der Welle 8, jedoch seitlich dazu versetzt, befinden sich zwei weitere Spindeln 9 und 10, welche parallel zueinander und zur angetriebenen Spindel 2 verlaufen, jedoch nicht angetrieben sind, sondern von Hand gedreht werden können, z.B. von außen mittels eines Schraubendrehers. Beide Spindeln 9 und 10 tragen je eine Platte 11, 12, die zu diesem Zweck mit einer passenden Gewindebohrung versehen ist. Zur Parallelführung der Platten bei Drehung der Spindeln 9 und 10 sowie zur Lagefixierung sind die Platten 11 und 12 mit je einer zylindrischen Bohrung versehen, die ebenfalls von der Welle 8 durchsetzt wird.

Auf den einander zugewandten Seiten der Platten 11 und 12 ist je ein Mikroschalter 13 bzw. 14 befestigt, der über Zuleitungen 17 und 18 mit dem Elektromotor im Block 5 verbunden ist und als Endausschalter dient.

Die Endausschalter 13 und 14 werden durch den Arm 7 betätigt, der auf die Schaltknöpfe 15 bzw. 16 der Endausschalter aufläuft. Die passende Lage der Schaltpunkte wird durch Verdrehen der Spindeln 9 und 10 nach dem Einbau der Schwimmbadabdeckung von Hand eingestellt.

- 5 -

Patentansprüche

1. Antriebsaggregat für die Wickelwalze einer rollbaren, schwimmenden Schwimmbadabdeckung aus einer folienkaschierten Schaumstoffbahn, bestehend aus einem Elektromotor und einem die Antriebswelle des Elektromotors mit der Wickelwalze verbindenden mechanischen Getriebe, dadurch gekennzeichnet, daß das Getriebe eine angetriebene Spindel (2) enthält, die - bezogen auf die Wickelwalze (6) - ein gleichbleibendes Übersetzungsverhältnis aufweist und mit einem eine zum Spindelgewinde passende Gewindebohrung aufweisen_den Arm (7) in Eingriff steht, in dessen Verschiebeweg zwei abstandsveränderliche Endausschalter (13,14) des Elektromotors angeordnet sind.

2. Antriebsaggregat nach Anspruch 1, dadurch gekennzeichnet, daß die beiden Endausschalter (13,14) durch je eine von Hand zu betätigende Spindel (9, 10) die untereinander und zur Spindel (2) des Getriebes parallel sind, einzeln verstellbar sind.

3. Antriebsaggregat nach Anspruch 1 oder 2, dadurch gekennzeichnet, daß der Arm (7) zwischen den beiden Endausschaltern (13,14) verschieblich ist.

4. Antriebsaggregat nach Anspruch 2, dadurch gekennzeichnet, daß die beiden Endausschalter (13,14) auf je einer mit einer Gewindebohrung und mit einer Zylinderbohrung versehenen Platte (11,12) befestigt sind, deren Gewindebohrung in Eingriff mit der zugehörigen Spindel (9, 10) steht und deren Zylinderbohrung zur Parallelführung der Platte (11,12) von einer zur Spindel (9, 10) parallelen, feststehenden Welle (8) durchsetzt wird.

5. Antriebsaggregat nach Anspruch 1, dadurch gekennzeichnet, daß der Arm (7) eine zylindrische Bohrung aufweist, die zur Parallelführung des Arms (7) von einer zur angetriebenen Spindel (2) parallelen, feststehenden Welle (8) durchsetzt wird.

6. Antriebsaggregat nach Anspruch 4 und 5, dadurch gekennzeichnet, daß zur Parallelführung des Arms (7) und der beiden die Endausschalter (13,14) tragenden Platten (11,12) eine gemeinsame Welle (8) vorgesehen ist.

Fig.1

Fig.2

**Europäisches Patentamt** **EUROPÄISCHER RECHERCHENBERICHT** Nummer der Anmeldung

EP 81106570.5

| | EINSCHLÄGIGE DOKUMENTE | | KLASSIFIKATION DER ANMELDUNG (Int Cl ) |
|---|---|---|---|
| Kategorie | Kennzeichnung des Dokuments mit Angabe. soweit erforderlich. der maßgeblichen Teile | betrifft Anspruch | |
| X | <u>DD - A - 43 226</u> (VETTERMANN)<br>* Zeichnung; Patentansprüche * | 1,3 | F 16 H 25/20<br>E 04 H 3/19 |
| A | <u>GB - A - 857 203</u> (MARCONI'S WIRELESS TELEGRAPH COMPANY LTD)<br>* Fig.1,2; Seiten 1,2 * | 5 | |
| | <u>DE - C - 549 302</u> (SIEMENS-SCHUCKERTWERKE AKTIENGESELLSCHAFT)<br>* Abb. 2; Seite 2, Zeilen 25-48 * | 2 | RECHERCHIERTE SACHGEBIETE (Int C ) |
| | <u>GB - A - 779 420</u> (BRONZAVIA S.A.)<br>* Fig. 1; Seite 1, Zeile 50 - Seite 2, Zeile 30 * | 1 | F 16 H 25/00<br>E 05 F 15/00<br>G 05 D 3/00 |
| | <u>US - A - 3 996 697</u> (BAILEY)<br>* Spalte 7; Zeile 11 - Spalte 8, Zeile 33; Fig. 8 * | 1,3 | H 02 P 3/00<br>H 02 K 7/00 |
| | <u>FR - A1 - 2 425 105</u> (PEUGEOT)<br>* Seite 2, Zeilen 7-15; Seite 3, Zeilen 1-10; Fig. 2 * | 1,3 | |
| A | <u>DE - B2 - 2 232 515</u> (SEITZ-WERKE)<br>* Spalte 2, Zeile 54 - Spalte 3, Zeile 32; Fig. 1,2 * | 1 | KATEGORIE DER GENANNTEN DOKUMENTE |
| | <u>GB - A - 1 021 644</u> (GROSS)<br>* Fig. 2,4; Seite 2, Zeile 25 - Seite 3, Zeile 21 * | 1-5 | X von besonderer Bedeutung<br>A technologischer Hintergrund<br>O nichtschriftliche Offenbarung<br>P Zwischenliteratur<br>T der Erfindung zugrunde liegende Theorien oder Grundsatze<br>E kollidierende Anmeldung<br>D in der Anmeldung angeführtes Dokument<br>L aus andern Grunde angefuhrtes Dokument<br>& Mitglied der gleichen Patentfamilie übereinstimmendes Dokument |

| X | Der vorliegende Recherchenbericht wurde für alle Patentansprüche erstellt |
|---|---|

| Recherchenort | Abschlußdatum der Recherche | Prüfer |
|---|---|---|
| WIEN | 24-11-1981 | HANSI |

EPA form 1503.1   06.78